# EUROPEAN PATENT SPECIFICATION

(11) **EP 4 266 469 B1**
(45) Date of publication and mention of the grant of the patent: **04.03.2026**
(21) Application number: 22820376.6
(22) Date of filing: 11.03.2022
(51) Int. Cl.: H01M 50/249, H01M 10/6551, H01M 10/613, H01M 10/625, H01M 10/653, H01M 50/24, H01M 10/647

(54) **BATTERY MODULE, BATTERY PACK AND VEHICLE COMPRISING THE BATTERY MODULE, AND METHOD FOR MANUFACTURING THE BATTERY MODULE**
BATTERIEMODUL, BATTERIEPACK UND FAHRZEUG MIT DEM BATTERIEMODUL UND VERFAHREN ZUR HERSTELLUNG DES BATTERIEMODULS
MODULE DE BATTERIE, BLOC-BATTERIE ET VÉHICULE COMPRENANT LE MODULE DE BATTERIE ET PROCÉDÉ DE FABRICATION DU MODULE DE BATTERIE

(30) Priority: 08.06.2021 KR 20210074431; 08.06.2021 KR 20210074432
(43) Date of publication of application: 25.10.2023
(73) Proprietor: LG Energy Solution, Ltd., Seoul 07335 (KR)
(72) Inventor: PARK, Jin-Yong, Daejeon 34122 (KR); CHI, Ho-June, Daejeon 34122 (KR); PARK, Jhin-Ha, Daejeon 34122 (KR); YOO, Jae-Min, Daejeon 34122 (KR)
(74) Representative: Goddar, Heinz J.
(86) International application number: PCT/KR2022/003483
(87) International publication number: WO 2022/260247

(56) References cited:
- EP-B1- 3 282 515
- WO-A1-2017/069527
- WO-A1-2018/008866
- WO-A1-2021/060735
- KR-A- 20170 140 693
- KR-A- 20200 002 349
- KR-A- 20210 035 522
- KR-B1- 100 870 354
- US-A1- 2010 092 845
- US-A1- 2013 255 068
- US-A1- 2020 373 633

## Description

### TECHNICAL FIELD

The present disclosure relates to a battery module, a battery pack and a vehicle comprising the battery module and a method for manufacturing the battery module.

The present application claims the benefit of Korean Patent Application No. 10-2021-0074431 filed on June 8, 2021 and Korean Patent Application No. 10-2021-0074432 filed on June 8, 2021 with the Korean Intellectual Property Office.

### BACKGROUND ART

Due to their characteristics of being easily applicable to various products and electrical properties such as a high energy density, secondary batteries are not only commonly applied to portable devices, but universally applied to electric vehicles (EVs) or hybrid electric vehicles (HEVs) that are driven by an electrical driving source. Such secondary batteries are gaining attention for their primary advantage of remarkably reducing the use of fossil fuels and not generating by-products from the use of energy, making it a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. This unit secondary battery cell, i.e., a unit battery cell has an operating voltage of about 2.5V to 4.5V. Accordingly, when a higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack may be variously set depending on the required output voltage or charge/discharge capacity.

Meanwhile, when fabricating the battery pack by connecting the plurality of battery cells in series/in parallel, it is general to make a battery module including at least one battery cell, and then fabricate a battery pack using at least one battery module with an addition of any other component.

In general, the conventional battery module includes a battery cell assembly including a plurality of battery cells, a base housing to support the bottom of the battery cell assembly, a side housing coupled to a base plate to support two surfaces of the battery cell assembly and a cover housing coupled to the side housing to cover the top of the battery cell assembly. Here, the battery cell assembly includes a plurality of cooling fins accommodating at least two battery cells to cool the plurality of battery cells. The conventional plurality of cooling fins accommodates at least two battery cells in the shape of U and the cooling fins and the battery cells are placed in contact with each other.

However, in the case of the conventional battery module, such as e.g. disclosed in EP 3 282 515 B1, to accommodate the at least two battery cells in the cooling fins, an operator has to spread out the two ends of the cooling fins and accommodate the battery cells in the cooling fins.

Accordingly, the conventional battery module requires a considerable amount of time to perform the process of accommodating the battery cells in the cooling fins, resulting in low assembly process efficiency.

Furthermore, the conventional battery module requires a plurality of housing members for accommodating the battery cell assembly, and thus requires an additional process for a connection process between the housing members, and the presence of the plurality of housing members increases the total size of the battery module and reduces the total energy density of the battery module.

KR 2020 0002349 A discloses a prior art battery cell assembly comprising a housing sheet that is a single member that wholly covers the battery cell assembly.

Accordingly, there is a need for an approach to provide a battery module with a slimmer and more compact structure and improved assembly process efficiency, a battery pack and a vehicle comprising the battery module, and a method for manufacturing the battery module.

### DISCLOSURE

### Technical Problem

The present disclosure is directed to providing a battery module with a slimmer and more compact structure, a battery pack and a vehicle comprising the battery module, and a method for manufacturing the battery module.

The present disclosure is further directed to providing a battery module with improved assembly process efficiency, a battery pack and a vehicle comprising the battery module, and a method for manufacturing the battery module.

### Technical Solution

To solve the above-described problem, the present disclosure provides a battery module including a battery cell assembly including a plurality of battery cells; and a housing sheet accommodating the battery cell assembly.

The battery module has a covered state, in which the housing sheet wholly covers a bottom of the battery cell assembly, two sides of the battery cell assembly and a top of the battery cell assembly.

The battery cell assembly includes a plurality of cooling fin units in the housing sheet, the plurality of cooling fin units accommodating two of the plurality of battery cells.

Each of the plurality of cooling fin units includes a first cooling fin to support any one of the two battery cells; a second cooling fin spaced apart from the first cooling fin, and configured to support the other one of the two battery cells; and a thermal interface material connecting the second cooling fin to the first cooling fin, and provided below the two battery cells.

The battery module has an insertion state, wherein the housing sheet is formed with a curved surface such that the distance between the first cooling fin and the second cooling fin is increased for insertion of the battery cells into the cooling fin units.

Preferably, the first cooling fin may include a first fin body to support a side of the any one battery cell; and a first fin base bent from the first fin body, and positioned below the any one battery cell.

Preferably, the second cooling fin may include a second fin body to support a side of the other battery cell; and a second fin base bent from the second fin body, and positioned below the other battery cell.

Preferably, the first fin base and the second fin base may be spaced a predetermined distance apart from each other.

Preferably, the thermal interface material may connect the first fin base to the second fin base, and is provided on the first fin base and the second fin base.

The housing sheet includes an insulating sheet having a predetermined length.

Preferably, the housing sheet may be positioned in an overlapping manner in at least part on a side of the battery cell assembly while covering a side of the battery cell assembly, a bottom of the battery cell assembly, an opposite side of the battery cell assembly and a top of the battery cell assembly.

Preferably, an end and an opposite end of the housing sheet may be positioned in an overlapping manner on a side of the battery cell assembly.

In addition, the present disclosure provides a battery pack including at least one battery module according to the above-described embodiment; and a pack case accommodating the at least one battery module.

Preferably, the battery pack may include an adhesive member between the at least one battery module and the pack case to fix the at least one battery module to the pack case.

In addition, the present disclosure provides a vehicle comprising at least one battery pack according to the above-described embodiment.

In addition, the present disclosure provides a method for manufacturing a battery module including placing a housing sheet of a predetermined length on a conveyor belt which guides the conveyance in a predetermined direction; seating a plurality of cooling fin units including a pair of a first cooling fin and a second cooling fin for supporting two sides of the battery cells on the housing sheet of the predetermined length; connecting the first cooling fin to the second cooling fin with a thermal interface material between the first cooling fin and the second cooling fin; allowing the housing sheet to pass through on a sloped roller which forms a curved surface of a predetermined height; inserting at least one battery cell between the first cooling fin and the second cooling fin when a distance between the first cooling fin and the second cooling fin increases as housing sheet passes through the sloped roller; and packaging with the housing sheet to cover the at least one battery cell and the plurality of cooling fin units when the housing sheet passes through the sloped roller.

### Advantageous Effects

According to the various embodiments as described above, it is possible to provide a battery module with a slimmer and more compact structure, a battery pack and a vehicle comprising the battery module, and a method for manufacturing the battery module.

In addition, according to the various embodiments as described above, it is possible to provide a battery module with improved assembly process efficiency, a battery pack and a vehicle comprising the battery module, and a method for manufacturing the battery module.

### DESCRIPTION OF DRAWINGS

The accompanying drawings illustrate an exemplary embodiment of the present disclosure, and together with the detailed description of the present disclosure described below, serve to provide a further understanding of the technical aspects of the present disclosure, and thus the present disclosure should not be construed as being limited to the drawings.
FIG. 1 is a diagram illustrating a battery module according to an embodiment of the present disclosure.
FIG. 2 is a diagram illustrating a battery cell assembly of the battery module of FIG. 1.
FIG. 3 is a diagram illustrating a cooling fin unit of the battery cell assembly of FIG. 2.
FIGS. 4 to 7 are diagrams illustrating an assembly process of the battery module of FIG. 1.
FIG. 8 is a diagram illustrating a battery pack according to an embodiment of the present disclosure.
FIG. 9 is a diagram illustrating a battery module according to another embodiment of the present disclosure.
FIG. 10 is a diagram illustrating a battery cell assembly of the battery module of FIG. 9.
FIG. 11 is a diagram illustrating a cooling fin unit of the battery cell assembly of FIG. 10.
FIGS. 12 to 15 are diagrams illustrating an assembly process of the battery module of FIG. 9.
FIG. 16 is a diagram illustrating a battery pack according to another embodiment of the present disclosure.
FIG. 17 is a diagram illustrating a vehicle according to an embodiment of the present disclosure.

### BEST MODE

The present disclosure will become apparent by describing an exemplary embodiment of the present disclosure in detail with reference to the accompanying drawings. The embodiment described herein is provided by way of illustration to help an understanding of the present disclosure, and it should be understood that various modifications may be made to the present disclosure in any other embodiment than the embodiment described herein. Additionally, to help an understanding of the present disclosure, the accompanying drawings are not shown in true scale and may depict some exaggerated elements.

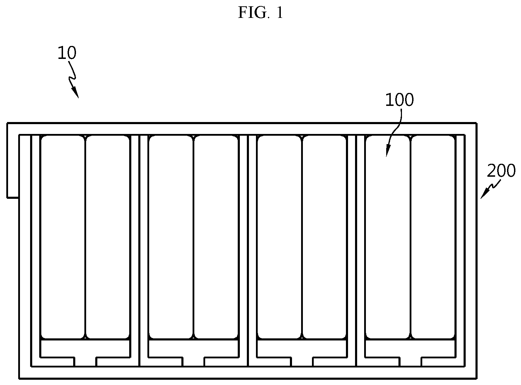

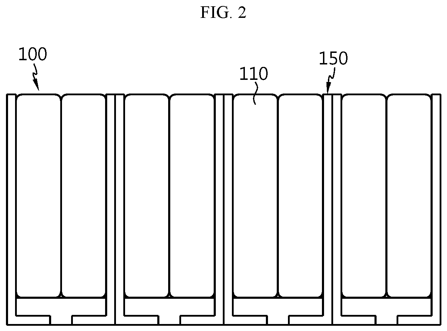

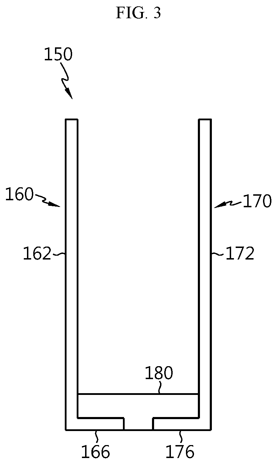

FIG. 1 is a diagram illustrating a battery module according to an embodiment of the present disclosure, FIG. 2 is a diagram illustrating a battery cell assembly of the battery module of FIG. 1, and FIG. 3 is a diagram illustrating a cooling fin unit of the battery cell assembly of FIG. 2.

Referring to FIGS. 1 to 3, the battery module 10 may include a battery cell assembly 100 and a housing sheet 200.

The battery cell assembly 100 may include a plurality of battery cells 110.

The plurality of battery cells 110 may be stacked such that they are electrically connected to each other. The plurality of battery cells 110 may be secondary batteries, for example, pouch type secondary batteries, cylindrical secondary batteries or prismatic secondary batteries. Hereinafter, this embodiment is described based on the plurality of battery cells 110 as pouch type secondary batteries.

The battery cell assembly 100 may include a plurality of cooling fin units 150.

The plurality of cooling fin units 150 may be provided in the housing sheet 200 as described below and may accommodate two of the plurality of battery cells 110.

Each of the plurality of cooling fin units 150 may include a first cooling fin 160, a second cooling fin 170 and a thermal interface material 180.

The first cooling fin 160 may be used to cool the battery cell 110 and guide the support of the battery cell 110, and support any one of two battery cells 110. The first cooling fin 160 may be made of aluminum.

The first cooling fin 160 may include a first fin body 162 and a first fin base 166.

The first fin body 162 may be formed with a predetermined length and may support the side of the any one battery cell 110. The first fin body 162 may come into surface contact with the side of the any one battery cell 110 to increase the cooling efficiency.

The first fin base 166 may be bent from the first fin body 162, and may be positioned below the any one battery cell 110. The first fin base 166 may be spaced a predetermined distance apart from a second fin base 176 as described below. The first fin base 166 may support the bottom of the any one battery cell 110 in at least part.

The second cooling fin 170 may be used to cool the battery cell 110 and guide the support of the battery cell 110 and be spaced apart from the first cooling fin 160, and may support the other one of the two battery cells 110. The second cooling fin 170 may be made of aluminum.

The second cooling fin 170 may include a second fin body 172 and the second fin base 176.

The second fin body 172 may be formed with a predetermined length and may support the side of the other battery cell 110. The second fin body 172 may come into surface contact with the side of the other battery cell 110 to increase the cooling efficiency.

The second fin base 176 may be bent from the second fin body 172, and may be positioned below the other battery cell 110. The second fin base 176 may support the bottom of the other battery cell 110 in at least part.

The thermal interface material 180 may connect the second cooling fin 170 to the first cooling fin 160, and may be positioned below the two battery cells 110. Specifically, the thermal interface material 180 may connect the first fin base 166 to the second fin base 176, and may be positioned on the first fin base 166 and the second fin base 176.

The thermal interface material 180 may include a thermally conducting adhesive. Furthermore, the thermal interface material 180 may include a potting resin.

The housing sheet 200 may accommodate the battery cell assembly 100.

Specifically, the housing sheet 200 may accommodate the battery cell assembly 100, and wholly cover the bottom of the battery cell assembly 100, two sides of the battery cell assembly 100 and the top of the battery cell assembly 100.

More specifically, the housing sheet 200 may be positioned in an overlapping manner in at least part on one side of the battery cell assembly 100 while covering one side of the battery cell assembly 100, the bottom of the battery cell assembly 100, the other side of the battery cell assembly 100 and the upper side of the battery cell assembly 100. According to the overlapping placement, one end and the other end of the housing sheet 200 may be positioned in an overlapping manner on one side of the battery cell assembly.

The housing sheet 200 may include an insulating sheet having a predetermined length. Specifically, the housing sheet 200 may include an insulating sheet including a high tensile strength and high viscosity material. For example, the housing sheet 200 may include a common tape, a plastic and an insulation coated metal sheet.

Since the housing sheet 200 is a single member that wholly covers the battery cell assembly 100, it is possible to reduce the number of components for module housing configuration compared to the conventional art and contribute to the slimmer battery module 10.

Accordingly, in this embodiment, it is possible to reduce the manufacturing cost of the battery module 10 and significantly increase the energy density of the battery module 10 through the housing sheet 200.

Hereinafter, an assembly process of the battery module 10 according to this embodiment will be described in more detail.

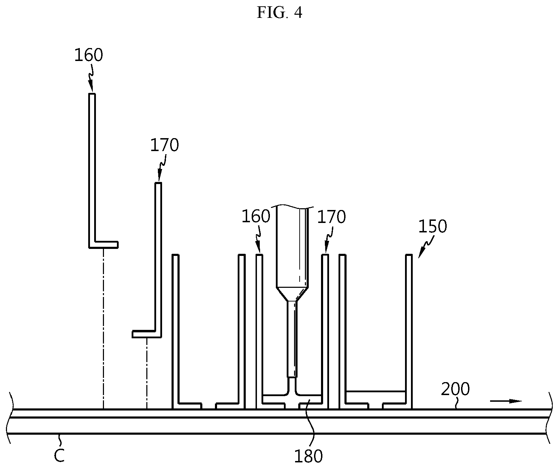

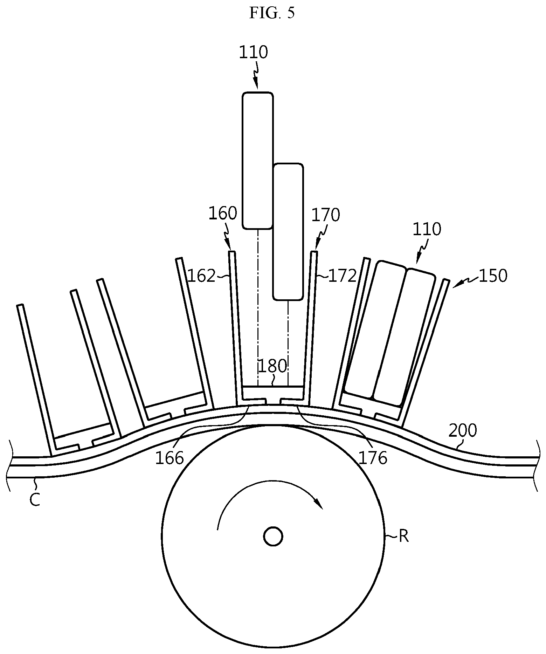

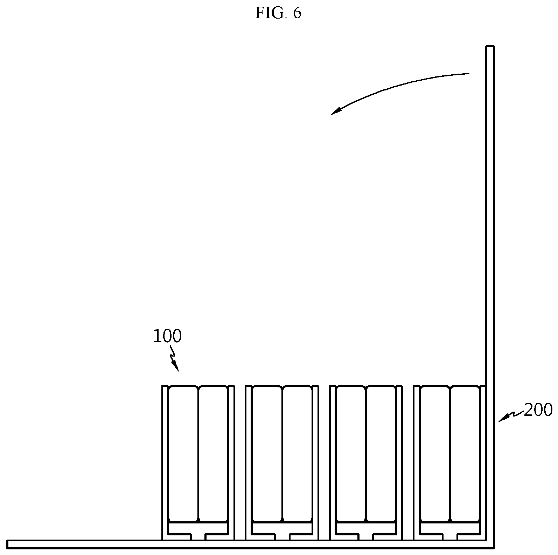

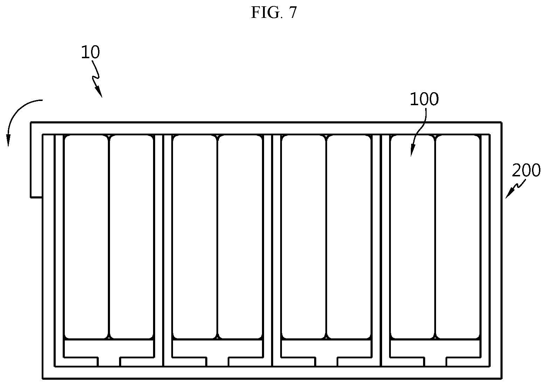

FIGS. 4 to 7 are diagrams illustrating an assembly process of the battery module of FIG. 1.

A method for manufacturing the battery module according to this embodiment will be described below with reference to FIGS. 4 to 7.

The method for manufacturing a battery module according to this embodiment may include the following steps in a sequential order.

First, the method for manufacturing a battery module may include the step of placing the housing sheet 200 of the predetermined length on a conveyor belt C that guides the conveyance in a predetermined direction.

The method for manufacturing a battery module may include the step of seating a plurality of cooling fin units 150 including a pair of the first cooling fin 160 and the second cooling fin 170 for supporting the two sides of the battery cells 110 on the housing sheet 200 of the predetermined length.

Additionally, the method for manufacturing a battery module may include the step of connecting the first cooling fin 160 to the second cooling fin 170 with the thermal interface material 180 between the first cooling fin 160 and the second cooling fin 170.

Additionally, the method for manufacturing a battery module may include the step of allowing the housing sheet 200 to pass through on a sloped roller R that forms a curved surface of a predetermined height.

Additionally, after the housing sheet 200 passes through on the sloped roller R, the method for manufacturing a battery module may include the step of inserting at least one battery cell 110 between the first cooling fin 160 and the second cooling fin 170 when the distance between the first cooling fin 160 and the second cooling fin 170 increases as the housing sheet 200 passes through the sloped roller R.

Additionally, the method for manufacturing a battery module may include the step of packaging with the housing sheet 200 to cover the at least one battery cell 110 and the plurality of cooling fin units 150 when the housing sheet 200 passes through the sloped roller R.

Here, in this embodiment, since the distance between the first cooling fin 160 and the second cooling fin 170 increases and decreases by itself as the housing sheet 200 passes through the sloped roller R, it is possible to make it easier to insert the battery cells 110 into the cooling fin unit 150.

Furthermore, in this embodiment, when the insertion of the battery cells 110 is completed, the housing sheet 200 may package the battery cell assembly 100 while covering the at least one battery cell 110 and the plurality of cooling fin units 150 along at least one direction in a sequential order.

As described above, in this embodiment, it is possible to insert the battery cells 110 into the cooling fin units 150 more easily and conveniently through the sloped roller R, thereby significantly increasing the assembly process efficiency of the battery module 10.

Furthermore, in this embodiment, it is possible to simplify the module housing configuration of the battery module 10 through the housing sheet 200 that covers the battery cell assembly 100, thereby achieving the slim battery module 10 and significantly increase the energy density of the battery module 10.

Meanwhile, after covering the housing sheet 200, the battery module may go through the sequential manufacturing process.

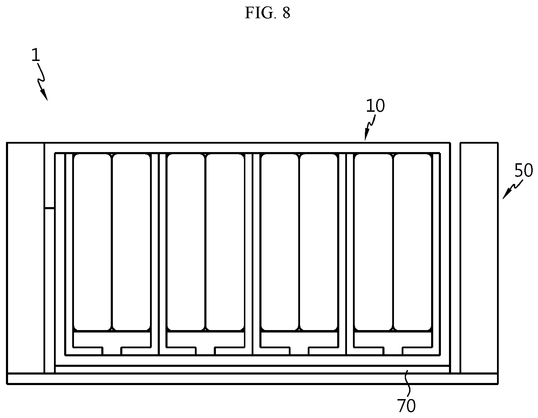

FIG. 8 is a diagram illustrating a battery pack according to an embodiment of the present disclosure.

Referring to FIG. 8, the battery pack 1 may include at least one battery module 10 according to the previous embodiment and a pack case 50 to package the at least one battery module 10.

The battery pack 1 may further include an adhesive member 70.

The adhesive member 70 may be used to guide the battery module 10 more stably, and may be positioned between the at least one battery module 10 and the pack case 50 to fix the at least one battery module 10 to the pack case 50.

The battery pack 1 according this embodiment does not require any fastening structure or a bolting member since the battery module 10 is fixed through the adhesive member 70 in the pack case 50.

Accordingly, according to this embodiment, it is possible to form a more compact accommodation structure of the battery module 10 that forms the appearance through the housing sheet 200 (see FIG. 1), thereby providing the battery pack 1 with a slimmer structure and high energy efficiency.

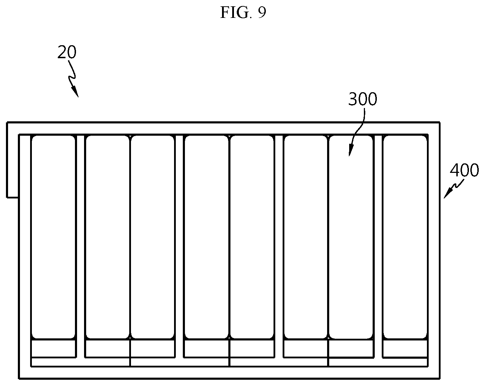

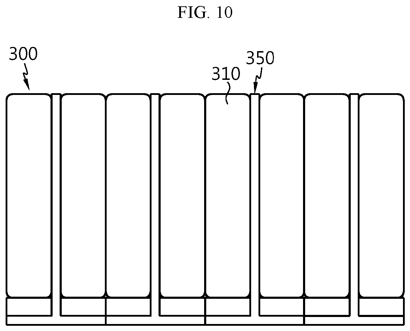

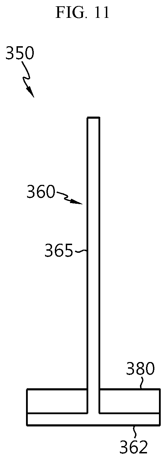

FIG. 9 is a diagram illustrating a battery module according to another embodiment of the present disclosure, FIG. 10 is a diagram illustrating a battery cell assembly of the battery module of FIG. 9, and FIG. 11 is a diagram illustrating a cooling fin unit of the battery cell assembly of FIG. 10.

The battery module 20 according to this embodiment is similar to the battery module 10 of the previous embodiment, and the substantially the same or similar elements to the previous embodiment are omitted to avoid redundancy, and the following description is made based on difference(s) between this embodiment and the previous embodiment.

Referring to FIGS. 9 to 11, the battery module 20 may include a battery cell assembly 300 and a housing sheet 400.

The battery cell assembly 300 may include a plurality of battery cells 310. The plurality of battery cells 310 are substantially the same as those of the previous embodiment, and overlapping descriptions are omitted.

The battery cell assembly 300 may include a plurality of cooling fin units 350.

The plurality of cooling fin units 350 may be used to cool and support the battery cells 310, and may be provided in the housing sheet 400 to wholly support at least two of the plurality of battery cells 310.

Each of the plurality of cooling fin units 350 may include an integrated cooling fin 360 and a thermal interface material 380.

The integrated cooling fin 360 may be made of aluminum, and may wholly support the two battery cells 110. The integrated cooling fin 360 may include a fin base 362 and a fin body 365.

The fin base 362 may support the bottom of the two battery cells 310. To this end, the fin base 362 may have a sufficient area to support the bottom of the two battery cells 310.

The fin body 365 may be provided in the fin base 362 between the two battery cells 310. The fin body 365 may come into surface contact with each of the two battery cells 310 to increase the cooling efficiency.

The thermal interface material 380 may be provided below the integrated cooling fin 360. Specifically, the thermal interface material 380 may be provided on the fin base 362 of the integrated cooling fin 360.

In the same way as the previous embodiment, the housing sheet 400 may accommodate the battery cell assembly 300, and wholly cover the bottom of the battery cell assembly 300, two sides of the battery cell assembly 300 and the top of the battery cell assembly 300.

Hereinafter, an assembly process of the battery module 20 according to this embodiment will be described in more detail.

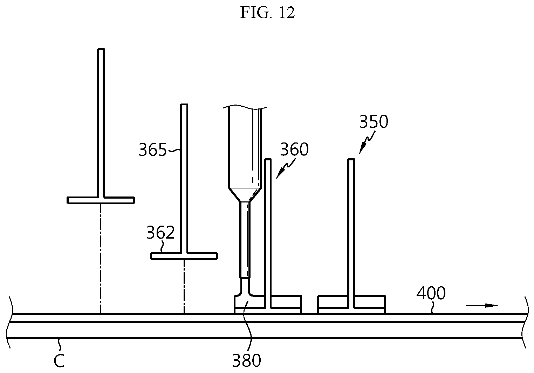

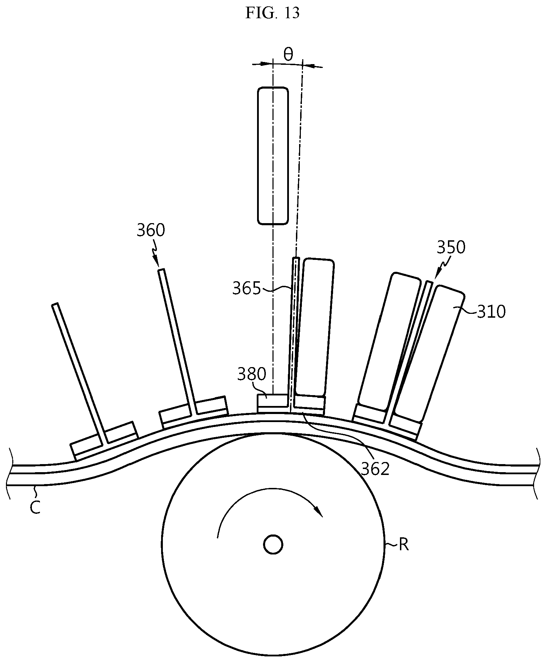

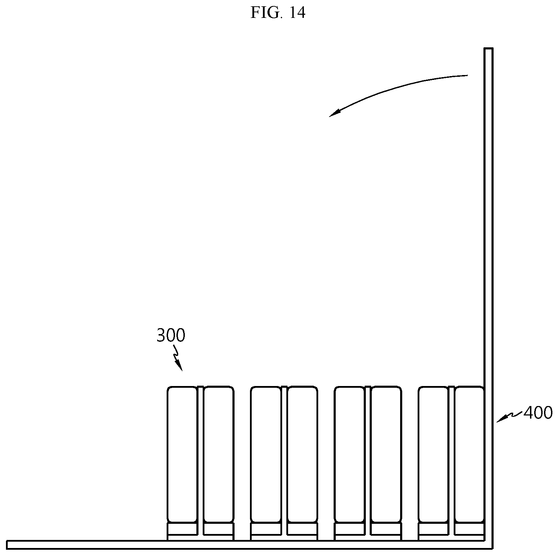

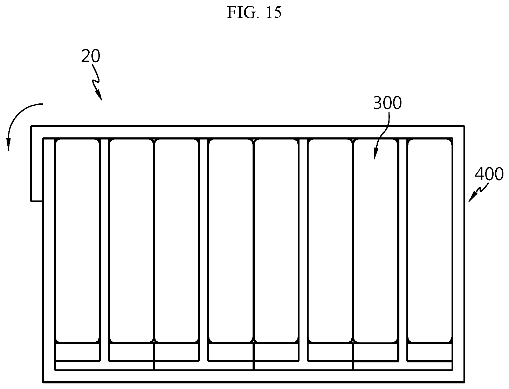

FIGS. 12 to 15 are diagrams illustrating the assembly process of the battery module of FIG. 9.

Referring to FIGS. 12 to 15, the method for manufacturing a battery module according to this embodiment may include the step of placing the housing sheet 400 having a predetermined length on the conveyor belt C that guides the conveyance in a predetermined direction.

Additionally, the method for manufacturing a battery module may include the step of seating a plurality of integrated cooling fins 360, each including the fin base 362 and the fin body 365 on the housing sheet 400 of the predetermined length, wherein the fin base 362 supports the bottom of two battery cells 310 and the fin body 365 is provided in the fin base 362 between the two battery cells 310.

Additionally, the method for manufacturing a battery module may include the step of applying the thermal interface material 380 to the fin base 362.

Additionally, the method for manufacturing a battery module may include the step of allowing the housing sheet 400 to pass through on the sloped roller R that forms a curved surface of a predetermined height.

Additionally, the method for manufacturing a battery module may include the step of seating the two battery cells 310 on the fin base 362 with the fin body 365 interposed between the two battery cells 310 when each fin body 365 tilts as the housing sheet 400 passes through the sloped roller R.

Furthermore, the method for manufacturing a battery module may include the step of packaging with the housing sheet 400 to cover the plurality of battery cells 310 and the plurality of integrated cooling fins 360 as the housing sheet 400 passes through the sloped roller R.

Here, in this embodiment, since each fin body 365 tilts at a predetermined angle θ by itself as the housing sheet 400 passes through the sloped roller R, it is possible to make it easier to seat the battery cells 310 on the integrated cooling fins 360.

Furthermore, in this embodiment, when the insertion of the battery cells 310 is completed, the housing sheet 400 may package the battery cell assembly 300 while covering the at least one battery cell 310 and the plurality of cooling fin units 350 along at least one direction in a sequential order.

As described above, in this embodiment, it is possible to seat the battery cells 310 in the cooling fin units 350 more easily and conveniently through the sloped roller R, thereby significantly increasing the assembly process efficiency of the battery module 20.

The above-described steps for manufacturing a battery module according to this embodiment may be performed in a sequential order. Meanwhile, after covering the housing sheet 400, the battery module may go through the sequential manufacturing process.

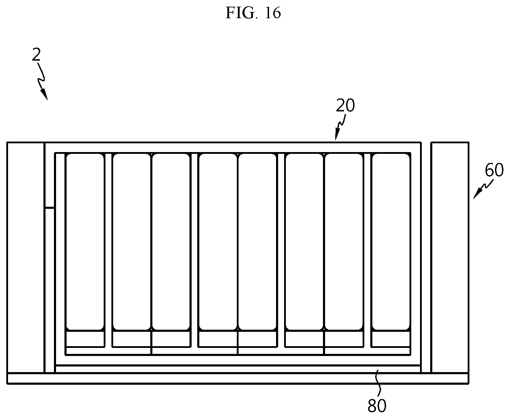

FIG. 16 is a diagram illustrating a battery pack according to another embodiment of the present disclosure.

Referring to FIG. 16, the battery pack 2 may include at least one battery module 20 according to the previous embodiment and a pack case 60 to package the at least one battery module 20.

The battery pack 2 may further include an adhesive member 80 in the same way as the previous embodiment.

Accordingly, also in this embodiment, in the same way as the previous embodiment, it is possible to form a more compact accommodation structure of the battery module 10 that forms the appearance through the housing sheet 400 (see FIG. 9), thereby providing the battery pack 2 with a slimmer structure and high energy efficiency.

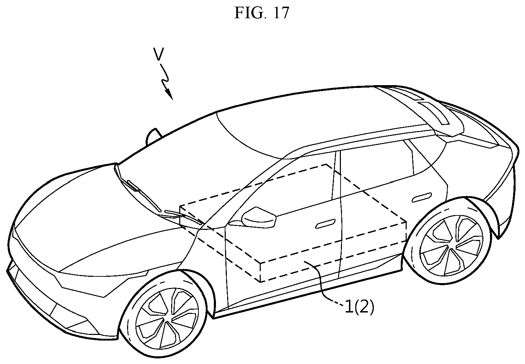

FIG. 17 is a diagram illustrating a vehicle according to an embodiment of the present disclosure.

Referring to FIG. 17, the battery packs 1, 2 may be provided in the vehicle V as a fuel source of vehicles. For example, the battery packs 1, 2 may be provided in electric vehicles, hybrid electric vehicles and the vehicle V in other ways of using the battery packs 1, 2 as a fuel source.

Additionally, in addition to the vehicle V, the battery packs 1, 2 may be provided in other devices, systems and equipment using secondary batteries, for example, energy storage systems.

Since the battery packs 1, 2 according to this embodiment and the device, system and equipment including the battery pack 1 such as the vehicle include the battery modules 10, 20, it is possible to achieve the battery packs 1, 2 having the above-described advantages of the battery modules 10, 20 and the device, system and equipment including the battery packs 1, 2, for example, the vehicle V.

According to the various embodiments as described above, it is possible to provide the battery modules 10, 20 with a slimmer and compact structure, the battery packs 1, 2 and the vehicle V including the battery modules 10, 20 and the methods for manufacturing the battery modules 10, 20.

Furthermore, according to the various embodiments as described above, it is possible to provide the battery modules 10, 20 with improved assembly process efficiency, the battery packs 1, 2 and the vehicle V including the battery modules 10, 20 and the methods for manufacturing the battery modules 10, 20.

While an exemplary embodiment of the present disclosure has been hereinabove illustrated and described, the present disclosure is not limited to the above-described particular embodiment and it is obvious to those skilled in the art that a variety of modifications and changes may be made thereto without departing from the claimed subject matter of the present disclosure in the appended claims, and such modifications and changes should not be individually understood from the technical aspects or scope of the present disclosure.

## Claims

1. A battery module (20), comprising:
a battery cell assembly (100, 300) including a plurality of battery cells (110, 310); and
a housing sheet (200, 400) accommodating the battery cell assembly (100, 300),
wherein the battery cell assembly (100, 300) includes a plurality of cooling fin units (150, 350) in the housing sheet (200, 400), the plurality of cooling fin units (150, 350) accommodating two of the plurality of battery cells (110, 310),
wherein each of the plurality of cooling fin units (150, 350) includes:
a first cooling fin (160, 360) to support any one of the two battery cells (110, 310);
a second cooling fin (170, 370) spaced apart from the first cooling fin (160, 360), and configured to support the other one of the two battery cells (110, 310); and
a thermal interface material (180, 380) connecting the second cooling fin (170, 370) to the first cooling fin (160, 360), and provided below the two battery cells (110, 310);
wherein the battery module (10) has an insertion state, wherein the housing sheet (200, 400) is formed with a curved surface such that the distance between the first cooling fin (160, 360) and the second cooling fin (170, 370) is increased for insertion of the battery cells (110) into the cooling fin units (150, 350).
wherein the battery module (10) has a covered state in which the housing sheet (200, 400) wholly covers a bottom of the battery cell assembly (100, 300), two sides of the battery cell assembly (100, 300) and a top of the battery cell assembly (100, 300),
wherein the housing sheet (200, 400) is a single member that wholly covers the battery cell assembly (100) and
wherein the housing sheet (200, 400) includes an insulating sheet having a predetermined length.

2. The battery module (20) according to claim 1, wherein the first cooling fin (160, 360) includes:
a first fin body (162, 362) to support a side of the any one battery cell (110, 310); and
a first fin base (166, 362) bent from the first fin body (162, 365), and positioned below the any one battery cell (110, 310).

3. The battery module (20) according to claim 2, wherein the second cooling fin (170) includes:
a second fin body (172) to support a side of the other battery cell (110, 310); and
a second fin base (176) bent from the second fin body (172), and positioned below the other battery cell (110, 310).

4. The battery module (20) according to claim 3, wherein the first fin base (166) and the second fin base (176) are spaced a predetermined distance apart from each other.

5. The battery module according to claim 3, wherein the thermal interface material (180, 380) connects the first fin base (166) to the second fin base (176), and is provided on the first fin base (166) and the second fin base (176).

6. The battery module (20) according to claim 1, wherein the housing sheet (200, 400) is positioned in an overlapping manner in at least part on a side of the battery cell assembly (100, 300) while covering a side of the battery cell assembly (100, 300), a bottom of the battery cell assembly (100, 300), an opposite side of the battery cell assembly (100, 300) and a top of the battery cell assembly (100, 300).

7. The battery module (20) according to claim 6, wherein an end and an opposite end of the housing sheet (200, 400) are positioned in an overlapping manner on a side of the battery cell assembly (100, 300).

8. A battery pack (1, 2), comprising:
at least one battery module (20) according to claim 1; and
a pack case (50, 60) accommodating the at least one battery module (20).

9. The battery pack (1, 2) according to claim 8, wherein comprises an adhesive member (70) between the at least one battery module (20) and the pack case (50, 60) to fix the at least one battery module (20) to the pack case (50, 60).

10. A vehicle (V) comprising at least one battery pack (1, 2) according to claim 8.

11. A method for manufacturing a battery module (20), comprising:
placing a housing sheet (200, 400) of a predetermined length on a conveyor belt (C) which guides the conveyance in a predetermined direction;
seating a plurality of cooling fin units (150, 350) including a pair of a first cooling fin (160, 360) and a second cooling fin (170, 370) for supporting two sides of the battery cells (110, 310) on the housing sheet (200, 400) of the predetermined length;
connecting the first cooling fin (160, 360) to the second cooling fin (170, 370) with a thermal interface material (180, 380) between the first cooling fin (160, 360) and the second cooling fin (170, 370);
allowing the housing sheet (200, 400) to pass through on a sloped roller (R) which forms a curved surface of a predetermined height;
inserting at least one battery cell (110, 310) between the first cooling fin (160, 360) and the second cooling fin (170, 370) when a distance between the first cooling fin (160, 360) and the second cooling fin (170, 370) increases as housing sheet (200, 400) passes through the sloped roller (R); and
packaging with the housing sheet (200, 400) to cover the at least one battery cell (110, 310) and the plurality of cooling fin units (150, 350) when the housing sheet (200, 400) passes through the sloped roller (R).

## Patentansprüche

1. Ein Batteriemodul (20), das Folgendes umfasst:
eine Batteriezellenbaugruppe (100, 300) mit einer Vielzahl von Batteriezellen (110, 310); und
eine Gehäusefolie (200, 400), die die Batteriezellenbaugruppe (100, 300) aufnimmt,
wobei die Batteriezellenbaugruppe (100, 300) eine Vielzahl von Kühlrippeneinheiten (150, 350) in der Gehäusefolie (200, 400) enthält, wobei die Vielzahl von Kühlrippeneinheiten (150, 350) zwei der Vielzahl von Batteriezellen (110, 310) aufnehmen,
wobei jede der Vielzahl von Kühlrippeneinheiten (150, 350) umfasst:
eine erste Kühlrippe (160, 360), um eine der beiden Batteriezellen (110, 310) zu tragen;
eine zweite Kühlrippe (170, 370), die von der ersten Kühlrippe (160, 360) beabstandet und so konfiguriert ist, dass sie die andere der beiden Batteriezellen (110, 310) trägt; und
ein thermisches Grenzflächenmaterial (180, 380), das die zweite Kühlrippe (170, 370) mit der ersten Kühlrippe (160, 360) verbindet und unter den beiden Batteriezellen (110, 310) vorgesehen ist;
wobei das Batteriemodul (10) einen Aufnahmezustand aufweist, wobei die Gehäusefolie (200, 400) mit einer gekrümmten Oberfläche ausgebildet ist, so dass der Abstand zwischen der ersten Kühlrippe (160, 360) und der zweiten Kühlrippe (170, 370) zum Einsetzen der Batteriezellen (110) in die Kühlrippeneinheiten (150, 350) vergrößert ist,
wobei das Batteriemodul (10) in einen Abdeckzustand Batteriezellenbaugruppe, bei dem die Gehäusefolie (200, 400) eine Unterseite der Batteriezellenbaugruppe (100, 300), zwei Seiten der Batteriezellenbaugruppe (100, 300) und eine Oberseite der Batteriezellenbaugruppe (100, 300) vollständig bedeckt,
wobei die Gehäusefolie (200, 400) ein einzelnes Teil ist, das die Batteriezellenbaugruppe (100) vollständig bedeckt, und
wobei die Gehäusefolie (200, 400) eine Isolierfolie mit einer vorbestimmten Länge aufweist.

2. Batteriemodul (20) nach Anspruch 1, wobei die erste Kühlrippe (160, 360) umfasst:
einen ersten Rippenkörper (162, 362) zum Abstützen einer Seite der einen Batteriezelle (110, 310); und
eine erste Rippenbasis (166, 362), die von dem ersten Rippenkörper (162, 365) abgewinkelt ist und unterhalb der einen Batteriezelle (110, 310) angeordnet ist.

3. Batteriemodul (20) nach Anspruch 2, wobei die zweite Kühlrippe (170) folgendes umfasst:
einen zweiten Rippenkörper (172), um eine Seite der anderen Batteriezelle (110, 310) zu stützen; und
eine zweite Rippenbasis (176), die von dem zweiten Rippenkörper (172) abgewinkelt und unterhalb der anderen Batteriezelle (110, 310) angeordnet ist.

4. Batteriemodul (20) nach Anspruch 3, wobei die erste Rippenbasis (166) und die zweite Rippenbasis (176) in einem vorbestimmten Abstand zueinander angeordnet sind.

5. Batteriemodul nach Anspruch 3, wobei das thermische Grenzflächenmaterial (180, 380) die erste Rippenbasis (166) mit der zweiten Rippenbasis (176) verbindet und auf der ersten Rippenbasis (166) und der zweiten Rippenbasis (176) vorgesehen ist.

6. Batteriemodul (20) nach Anspruch 1, wobei die Gehäusefolie (200, 400) zumindest teilweise überlappend auf einer Seite der Batteriezellenbaugruppe (100, 300) angeordnet ist, während es eine Seite der Batteriezellenbaugruppe (100, 300), einen Boden der Batteriezellenbaugruppe (100, 300), eine gegenüberliegende Seite der Batteriezellenbaugruppe (100, 300) und eine Oberseite der Batteriezellenbaugruppe (100, 300) bedeckt.

7. Batteriemodul (20) nach Anspruch 6, wobei ein Ende und ein gegenüberliegendes Ende der Gehäusefolie (200, 400) überlappend auf einer Seite der Batteriezellenbaugruppe (100, 300) angeordnet sind.

8. Batteriepack (1, 2), umfassend:
mindestens ein Batteriemodul (20) nach Anspruch 1; und
ein Packgehäuse (50, 60), das das mindestens eine Batteriemodul (20) aufnimmt.

9. Batteriepack (1, 2) nach Anspruch 8, wobei er ein Klebeteil (70) zwischen dem mindestens einen Batteriemodul (20) und dem Packgehäuse (50, 60) umfasst, um das mindestens eine Batteriemodul (20) an dem Packgehäuse (50, 60) zu befestigen.

10. Fahrzeug (V) mit mindestens einem Batteriepack (1, 2) nach Anspruch 8.

11. Verfahren zur Herstellung eines Batteriemoduls (20), umfassend:
Platzieren einer Gehäusefolie (200, 400) mit einer vorbestimmten Länge auf einem Förderband (C), das die Förderung in eine vorbestimmte Richtung leitet;
Anordnen einer Vielzahl von Kühlrippeneinheiten (150, 350), die ein Paar aus einer ersten Kühlrippe (160, 360) und einer zweiten Kühlrippe (170, 370) umfassen, um zwei Seiten der Batteriezellen (110, 310) auf der Gehäusefolie (200, 400) mit der vorbestimmten Länge zu tragen;
Verbinden der ersten Kühlrippe (160, 360) mit der zweiten Kühlrippe (170, 370) mittels eines thermischen Grenzflächenmaterials (180, 380) zwischen der ersten Kühlrippe (160, 360) und der zweiten Kühlrippe (170, 370);
Erlauben eines Abfahrens der Gehäusefolie (200, 400) auf einer geneigten Rolle (R), die eine gekrümmte Oberfläche mit einer vorbestimmten Höhe bildet;
Einsetzen mindestens einer Batteriezelle (110, 310) zwischen die erste Kühlrippe (160, 360) und die zweite Kühlrippe (170, 370), wenn sich ein Abstand zwischen der ersten Kühlrippe (160, 360) und der zweiten Kühlrippe (170, 370) vergrößert, während die Gehäusefolie (200, 400) die geneigte Rolle (R) abfährt; und
Verpackung mit der Gehäusefolie (200, 400), um die mindestens eine Batteriezelle (110, 310) und die Vielzahl von Kühlrippeneinheiten (150, 350) zu bedecken, während die Gehäusefolie (200, 400) die geneigte Rolle (R) abfährt.

## Revendications

1. Module de batterie (20) comprenant :
un ensemble d'éléments de batterie (100, 300) comprenant une pluralité d'éléments de batterie (110, 310) ; et
une enveloppe de boîtier (200, 400) dans lequel est logé l'ensemble d'éléments de batterie (100, 300),
l'ensemble d'éléments de batterie (100, 300) comprenant une pluralité d'unités d'ailettes de refroidissement (150, 350) dans l'enveloppe de boîtier (200, 400), la pluralité d'unités d'ailettes de refroidissement (150, 350) contenant deux de la pluralité d'éléments de batterie (110, 310),
chacune de la pluralité d'unités d'ailettes de refroidissement (150, 350) comprenant :
une première ailette de refroidissement (160, 360) pour supporter un quelconque des deux éléments de batterie (110, 310) ;
une deuxième ailette de refroidissement (170, 370) espacée de la première ailette de refroidissement (160, 360), et configurée pour supporter l'autre des deux éléments de batterie (110, 310) ;
et
une matière d'interface thermique (180, 380) raccordant la deuxième ailette de refroidissement (170, 370) à la première ailette de refroidissement (160, 360), et agencée sous les deux éléments de batterie (110, 310) ;
le module de batterie (10) possédant un état d'insertion, l'enveloppe de boîtier (200, 400) étant formée avec une surface courbe de sorte que la distance entre la première ailette de refroidissement (160, 360) et la deuxième ailette de refroidissement (170, 370) soit augmentée pour l'insertion des éléments de batterie (110) dans les ailettes de refroidissement (150, 350),
le module de batterie (10) possédant un état couvert dans lequel l'enveloppe de boîtier (200, 400) couvre entièrement un fond de l'ensemble d'éléments de batterie (100, 300), deux côtés de l'ensemble d'éléments de batterie (100, 300), et un dessus de l'ensemble d'éléments de batterie (100, 300),
l'enveloppe de boîtier (200, 400) étant un élément unique couvrant entièrement l'ensemble d'éléments de batterie (100), et
l'enveloppe de boîtier (200, 400) comprenant une enveloppe isolante d'une longueur prédéterminée.

2. Module de batterie (20) selon la revendication 1, la première ailette de refroidissement (160, 360) comprenant :
un corps de première ailette (162, 362) pour supporter un côté de l'un élément de batterie (110, 310) quelconque ; et
une base de première ailette (166, 362) pliée depuis le corps de première ailette (162, 365), et positionnée sous l'un élément de batterie (110, 310) quelconque.

3. Module de batterie (20) selon la revendication 2, la deuxième ailette de refroidissement (170) comprenant :
un corps de deuxième ailette (172) pour supporter un côté de l'autre élément de batterie (110, 310) quelconque ; et
une base de deuxième ailette (176) pliée depuis le corps de deuxième ailette (172), et positionnée sous l'autre élément de batterie (110, 310).

4. Module de batterie (20) selon la revendication 3, la base de première ailette (166) et la base de deuxième ailette (176) étant espacées l'une de l'autre d'une distance prédéterminée.

5. Module de batterie (20) selon la revendication 3, la matière d'interface thermique (180, 380) connectant la base de première ailette (166) à la base de deuxième ailette (176), et étant agencée sur la base de première ailette (166) et la base de deuxième ailette (176).

6. Module de batterie (20) selon la revendication 1, l'enveloppe de boîtier (200, 400) étant positionnée de façon chevauchante au moins une partie d'un côté de l'ensemble d'éléments de batterie (100, 300) tout en couvrant un côté de l'ensemble d'éléments de batterie (100, 300), un fond de l'ensemble d'éléments de batterie (100, 300), un côté opposé de l'ensemble d'éléments de batterie (100, 300), et un dessus de l'ensemble d'éléments de batterie (100, 300).

7. Module de batterie (20) selon la revendication 6, un bout et un côté opposé de l'enveloppe de boîtier (200, 400) étant positionnées en se chevauchant sur un côté de l'ensemble d'éléments de batterie (100, 300).

8. Bloc-batterie (1, 2) comprenant :
au moins un module de batterie (20) selon la revendication 1 ; et
un boîtier de bloc (50, 60) contenant l'au moins un module de batterie (20).

9. Bloc-batterie (1, 2) comprenant selon la revendication 8, comprenant un élément adhésif (70) entre l'au moins un module de batterie (20) et le boîtier de bloc (50, 60) pour fixer l'au moins un module de batterie (20) au boîtier de bloc (50, 60).

10. Véhicule (V) comprenant au moins un bloc-batterie (1, 2) selon la revendication 8.

11. Procédé de fabrication d'un module de batterie (20) comprenant :
le placement d'une enveloppe de boîtier (200, 400) d'une longueur prédéterminée sur une bande transporteuse (C) guidant le transport dans une direction prédéterminée ;
le calage d'une pluralité d'unités d'ailettes de refroidissement (150, 350), comprenant une paire d'une première ailette de refroidissement (160, 360) et d'une deuxième ailette de refroidissement (170, 370) pour supporter deux côtés des éléments de batterie (110, 310), sur l'enveloppe de boîtier (200, 400) d'une longueur prédéterminée ;
le raccordement de la première ailette de refroidissement (160, 360) à la deuxième ailette de refroidissement (170, 370) avec une matière d'interface thermique (180, 380) entre la première ailette de refroidissement (160, 360) et la deuxième ailette de refroidissement (170, 370) ;
le passage de l'enveloppe de boîtier (200, 400) à travers un rouleau à pente (R) formant une surface courbe d'une hauteur prédéterminée ;
l'insertion d'au moins un élément de batterie (110, 310) entre la première ailette de refroidissement (160, 360) et la deuxième ailette de refroidissement (170, 370) lorsqu'une distance entre la première ailette de refroidissement (160, 360) et la deuxième ailette de refroidissement (170, 370) augmente lors du passage de l'enveloppe de boîtier (200, 400) à travers le rouleau à pente (R) ; et
le conditionnement avec l'enveloppe de boîtier (200, 400) pour couvrir l'au moins un élément de batterie (110, 310) et la pluralité d'unités d'ailettes de refroidissement (150, 350) lorsque l'enveloppe de boîtier (200, 400) passe à travers le rouleau à pente (R).
